# EUROPÄISCHE PATENTSCHRIFT

(11) **EP 3 386 458 B1**
(45) Veröffentlichungstag und Bekanntmachung des Hinweises auf die Patenterteilung: **02.01.2019**
(21) Anmeldenummer: 18705565.2
(22) Anmeldetag: 06.02.2018
(51) Int. Cl.: A61G 7/05, A61G 13/10, B60B 33/00

(54) **FAHRWERK EINER TRANSPORTABLEN EINRICHTUNG**
CHASSIS OF A TRANSPORTABLE DEVICE
MÉCANISME DE ROULEMENT D'UN DISPOSITIF TRANSPORTABLE

(30) Priorität: 15.02.2017 DE 102017103050
(43) Veröffentlichungstag der Anmeldung: 17.10.2018
(73) Patentinhaber: Hoerbiger Automatisierungstechnik Holding GmbH, 86972 Altenstadt (DE)
(72) Erfinder: FIEDLER, Klaus, 93073 Neutraubling (DE); STOCKMEIER, Thomas, 93057 Regensburg (DE)
(74) Vertreter: Grättinger Möhring von Poschinger Patentanwälte Partnerschaft
(86) Internationale Anmeldenummer: PCT/EP2018/052907
(87) Internationale Veröffentlichungsnummer: WO 2018/149691

(56) Entgegenhaltungen:
- DE-A1-102012 001 555
- US-A- 2 837 387

## Beschreibung

Die vorliegende Erfindung betrifft ein Fahrwerk einer transportablen Einrichtung, umfassend eine Basisstruktur und vier daran angeordnete Rollen. Insbesondere betrifft die vorliegende Erfindung ein Fahrwerk der gattungsgemäßen, im Oberbegriff des Anspruchs 1 angegebenen Art.

Diverse Einrichtungen, die bestimmungsgemäß an verschiedenen Orten aufgestellt bzw. genutzt werden sollen, verfügen über ein eine Basisstruktur und vier daran angeordnete Rollen aufweisendes Fahrwerk. Dies gilt namentlich für schwere und/oder sperrige Einrichtungen wie beispielsweise - im medizinischen Bereich - Operationstische, Krankenhausbetten, Operationsroboter sowie Untersuchungs- und Behandlungsgeräte und - im industriellen Bereich - für diverse Maschinen und Geräte.

Um die jeweilige transportable Einrichtung an dem Aufstellungsort zu sichern, d. h. insbesondere gegen unbeabsichtigtes Wegrollen zu sichern, sind verschiedene Möglichkeiten bekannt. Häufig werden hierzu auf die Rollen wirkende, diese blockierende Bremsen eingesetzt. Bei Fahrwerken mit Lenkrollen ist dabei allerdings nachteilig, dass auch bei blockierten Rollen - durch Verschwenken des Rollenträgers in der Lagerung um eine zum Aufstandpunkt der Rolle auf dem Untergrund versetzte vertikale Schwenkachse - noch immer eine Bewegung der betreffenden Einrichtung im gewissen Umfang möglich ist. Ist dergleichen bei der betreffenden Einrichtung nicht tolerabel, so muss zusätzlich zum Blockieren der Rolle in dem Rollenträger dieser selbst in der Lagerung blockiert werden, was einen erheblichen Mehraufwand bedeutet.

Ist eine absolut sichere, unverrückbare Lagesicherung der Einrichtung an dem jeweiligen Aufstell- bzw. Einsatzort gewünscht bzw. erforderlich, so kommen daher teilweise - bei Fahrwerken mit einem gattungsgemäßen Aufbau - statt gebremster Rollen an der Basisstruktur angeordnete, absenkbare und anhebbare Stützfüße zum Einsatz, die in ihrer vollständig abgesenkten Stellung die Rollen entlasten bzw. vom Untergrund ab- und die Basisstruktur etwas anheben. Dem Absenken und Anheben der Stützfüße dient dabei eine Stützfuß-Betätigungseinrichtung. Ein solches Fahrwerk ist beispielsweise aus der DE 10 2012 001 555 A1 bekannt. Die Leitungs- und Ventilanordnung ist dabei dergestalt ausgeführt, dass in allen vier Linearaktuatoren simultan der gleiche Druck aufgebaut wird, wobei durch den einzelnen Linearaktuatoren jeweils paarweise zugeordnete Rückschlagventile eine Ausgleichsströmung zwischen den einzelnen Linearaktuatoren unterbunden wird.

Auch bei dem aus der US 2837387 A bekannten gattungsgemäßen Fahrgestell erfolgt eine simultane parallele Beaufschlagung der vier Stützfußlinearaktuatoren, wobei die Hydraulikpumpe zusätzlich dem (anschließenden) teleskopischen Ausfahren einer Hubsäule dient, mittels derer eine Behandlungsliege auf dem Fahrgestell abgestützt ist.

Die vorliegende Erfindung hat sich zur Aufgabe gemacht, ein Fahrwerk der eingangs genannten Art bereitzustellen, das unter Einsatz vergleichsweise einfacher und zuverlässig wirkender Mittel eine verlässliche Lagesicherung der zugehörigen Einrichtung an dem jeweiligen Aufstellort ermöglicht, wobei die Lagesicherung zudem - im Falle eines unebenen Untergrunds am Aufstellort - einem Kippeln der Einrichtung vorbeugen und - für eine Veränderung des Aufstell- bzw. Einsatzorts - schnell und einfach aufhebbar sein soll.

Gelöst wir diese Aufgabenstellung erfindungsgemäß durch das in Anspruch angegebene Fahrwerk. Dieses zeichnet sich demnach durch die nachstehenden, untereinander und mit den eingangs angegebenen Merkmalen synergetisch zusammenwirkenden Besonderheiten aus:
Das Fahrwerk umfasst vier an der Basisstruktur angeordnete, absenkbare und anhebbare Stützfüße und eine hydraulische Stützfuß-Betätigungseinrichtung. Diese weist einen Vorratsbehälter, eine manuell per Hand oder Fuß zu betätigende Pumpe, vier Stützfuß-Linearaktuatoren und eine den Vorratsbehälter, die Pumpe und die Linearaktuatoren miteinander verbindende Leitungs- und Ventilanordnung auf. Letztere ist dabei rein hydro-mechanisch dergestalt ausgeführt, dass mittels durch die Pumpe aus dem Vorratsbehälter geförderter Hydraulikflüssigkeit vor einer Druckbeaufschlagung zweier sekundärer Linearaktuatoren zunächst durch Druckbeaufschlagung der beiden anderen, primären Linearaktuatoren die beiden diesen zugeordneten Stützfüße bis zum Erreichen eines mechanischen Anschlags unter Anheben der Basisstruktur vollständig ausfahrbar sind.

Ein erstes bezeichnendes Charakteristikum besteht demnach darin, dass die Stützfuß-Betätigungseinrichtung auf hydraulischem Prinzip arbeitet. Auf diese Weise können selbst schwerste Einrichtungen unter Einsatz der vorliegenden Erfindung lagegesichert aufgestellt werden. Indem dabei die Pumpe der hydraulischen Stützfuß-Betätigungseinrichtung manuell per Hand oder Fuß betätigbar ist und die den Vorratsbehälter, die Pumpe und die Linearaktuatoren miteinander verbindende Leitungs- und Ventilanordnung rein hydro-mechanisch ausgeführt ist, d. h. insbesondere keinerlei elektrisch oder pneumatisch betätigte Ventile aufweist, bestehen keinerlei bauliche Anforderungen (z. B. Stromanschluss oder Druckluftanschluss) an den jeweiligen Aufstellort. So kann die vorliegende Erfindung mit Vorteil insbesondere auch an gar keine bzw. keine zuverlässige technische Infrastruktur aufweisenden Einsatzorten für die mit dem betreffenden Fahrwerk ausgestattete Einrichtung zum Einsatz kommen.

Ein Kippeln der Einrichtung auf einem unebenen Untergrund am jeweiligen Aufstellort wird dabei durch die erfindungsgemäß realisierte spezifische hierarchische Beaufschlagung der den vier Stützfüßen zugeordneten hydraulischen Linearaktuatoren unterbunden. Die erfindungsgemäß zum Einsatz kommende Leitungs- und Ventilanordnung bewirkt nämlich, dass - bei fortgesetzter Betätigung der Pumpe - zwei Stützfüße durch Beaufschlagung der diesen zugeordneten Linearaktuatoren, der so bezeichneten primären Linearaktuatoren, mit durch die Pumpe geförderter Hydraulikflüssigkeit - unter entsprechendem Druckaufbau - bis zum Erreichen eines mechanischen Anschlags abgesenkt werden, bevor in den beiden anderen Linearaktuatoren, den so bezeichneten sekundären Linearaktuatoren, ein Druckaufbau erfolgen kann. Die besagten, am jeweiligen primären Linearaktuator bzw. am zugeordneten Stützfuß vorgesehenen mechanischen Anschläge sind dabei so ausgeführt, dass zwei zugeordnete, den betreffenden primären Stützfüßen mehr oder weniger benachbarte Rollen - unter Anheben der Basisstruktur des Fahrwerks - vom Untergrund abgehoben werden. Die beiden durch die sekundären Linearaktuatoren verfahrbaren Stützfüße werden dabei bis zum Erreichen der durch die Anschläge definierten Endstellungen der primären Stützfüße nur in dem Umfang nachgeführt, wie dies - weil der betreffende sekundäre Stützfuß sonst "in der Luft hängt" - ohne Druckaufbau in den sekundären Linearaktuatoren möglich ist. Erst ab dem Erreichen der Endstellungen der beiden primären Stützfüße ist in den sekundären Linearaktuatoren ein Druckaufbau möglich, wie er einer Stabilisierung der Einrichtung gegen Kippeln auch bei wechselnden Belastungssituationen dient. Dieser Druckaufbau ist dabei, wie dies weiter unten im Detail erläutert ist, bevorzugt durch ein - entsprechend auf das Gewicht der Einrichtung abgestimmtes - Druckminderventil dergestalt begrenzt, dass ein weiteres Anheben der Basisstruktur unterbleibt.

Lediglich vorsorglich sei zur Klarstellung angemerkt, dass im vorstehenden Sinne als eine Verstellung der Linearaktuatoren "ohne Druckaufbau" auch eine solche zu verstehen ist, bei der in den Linearaktuatoren der für eine Leerbewegung der Stützfüße, d. h. das Bewegen der freien, unbelasteten Stützfüße (gegen Reibung sowie eine ggf. vorgesehene Rückstellfeder) erforderliche Mindest-Hydraulikdruck herrscht. Demnach bedeutet "ohne Druckaufbau" insbesondere nicht, dass der betreffende Linearaktuator drucklos ist bzw. in ihm der identische Druck herrscht wie im Vorratsbehälter.

Gemäß einer ersten bevorzugten Weiterbildung der vorliegenden Erfindung sind die Linearaktuatoren einfach wirkend ausgeführt. Dies führt zu einem besonders einfachen hydraulischen Gesamtsystem. Dabei wird auch berücksichtigt, dass das Absenken der - in der lagegesicherten Konfiguration der mit dem Fahrwerk ausgestatteten Einrichtung - angehobenen Basisstruktur, bis das Fahrwerk allein durch die Rollen getragen wird, zumeist unter dem Eigengewicht der Einrichtung erfolgen kann. Für das weitere Anheben der Stützfüße, damit diese wieder in ihre vollständig angehobene Stellung gelangen, können dabei Rückstellfedern vorgesehen sein. Solche können insbesondere, in abermals bevorzugter Weiterbildung, in die Linearaktuatoren integriert sein. In Betracht kommt allerdings auch eine Anordnung derartiger Rückstellfedern außerhalb der Linearaktuatoren.

Eine andere bevorzugte Weiterbildung der vorliegenden Erfindung zeichnet sich dadurch aus, dass die beiden primären Linearaktuatoren dergestalt hydraulisch gekoppelt sind, dass sie aus der Pumpe über ein einziges, gemeinsames primäres Rückschlagventil beaufschlagt werden. Das (gemeinsame) Rückschlagventil sorgt dabei für einen dauerhaft zuverlässigen Stand der Einrichtung am Aufstellort auf den beiden maximal, d. h. bis zum Anschlag ausgefahrenen ersten Stützfüßen. Bevorzugt zweigt dabei zwischen dem primären Rückschlagventil und den beiden primären Linearaktuatoren eine gemeinsame, zum Vorratsbehälter führende primäre Ablassleitung ab, in der ein manuell per Hand oder Fuß zu betätigendes primäres Ablassventil angeordnet ist. Durch Betätigen jenes primären Ablassventils wird die durch die primären Stützfüße bereitgestellte Lagesicherung der Einrichtung aufgehoben, typischerweise unter Absenken der Basisstruktur des Fahrwerks auf zu den ersten Stützfüßen benachbarte Rollen.

Anders, als es für die primären Linearaktuatoren gilt, sind - gemäß einer weiteren bevorzugten Weiterbildung der Erfindung - die beiden sekundären Linearaktuatoren dergestalt hydraulisch parallelgeschaltet, dass sie aus der Pumpe über zwei getrennte sekundäre Rückschlagventile beaufschlagt werden. Hierdurch werden bei der am Aufstellort lagegesichert ausgestellten Einrichtung die beiden sekundären Stützbeine unabhängig voneinander dauerhaft in ihrer jeweiligen, das Kippeln der Einrichtung unterbindenden Stellung gehalten. Bevorzugt zweigt dabei zwischen dem jeweiligen sekundären Rückschlagventil und dem jeweils zugeordneten sekundären Linearaktuator jeweils eine individuelle, zum Vorratsbehälter führende sekundäre Ablassleitung ab, in der jeweils ein manuell per Hand oder Fuß zu betätigendes sekundäres Ablassventil angeordnet ist. Durch Betätigen jener beiden sekundären Ablassventile wird die durch die sekundären Stützfüße bereitgestellte Lagesicherung der Einrichtung aufgehoben, typischerweise unter Anheben der Stützfüße mittels der oben erwähnten Rückstellfedern.

In weiterhin bevorzugter konstruktiver Konkretisierung der vorstehend erläuterten Umsetzung der vorliegenden Erfindung ist zwischen die Pumpe und das primäre Rückschlagventil ein primäres Druckminderventil und zwischen die Pumpe und die beiden sekundären Rückschlagventile ein gemeinsames sekundäres Druckminderventil geschaltet. Dabei ist das primäre Druckminderventil auf einen höheren Ausgangsdruck eingestellt als das sekundäre Druckminderventil. So lässt sich mit geringem apparativen Aufwand und auf besonders zuverlässige Weise die weiter oben erläuterte hierarchische Beaufschlagung der primären und sekundären Linearaktuatoren aus der Pumpe bewerkstelligen. Denn nachdem durch Betätigen der Pumpe die vier Stützfüße - ohne Druckaufbau (s. o.) in dem jeweiligen Linearaktuator - jeweils bis zum Erreichen des Untergrunds abgesenkt worden sind, so das sich beim weiteren Betätigen der Pumpe ein Druck aufbaut, schließt das (auf einen geringeren Ausgangsdruck eingestellte) sekundäre Druckminderventil, und nur die beiden primären Linearaktuatoren werden beaufschlagt. Führt - aufgrund der bestehenden Untergrundverhältnisse - das Absenken der primären Stützfüße bis zum jeweiligen Anschlag gegen Ende der betreffenden Absenkbewegung dazu, dass einer der beiden sekundären Stützfüße entlastet wird, so öffnet das sekundäre Druckminderventil, und dementsprechend wird der betreffende, "in der Luft hängende" sekundäre Stützfuß permanent nachgeführt. So erfolgt, bis auch der zweite primäre Stützfuß seine durch den zugeordneten Anschlag definierte Endstellung erreicht, ein gleichzeitiges Absenken eines primären und eines sekundären Stützfußes. Damit ist die endgültige Lage der Einrichtung erreicht. Um diese Lage zu sichern, lässt sich durch weiteres Betätigen der Pumpe in den sekundären Linearaktuatoren ein Haltedruck erzeugen, dessen Höhe durch das sekundäre Druckminderventil vorgegeben ist. Wie dies bereits weiter oben ausgeführt wurde, ist der betreffende Ausgangsdruck des sekundären Druckminderventils bevorzugt dergestalt auf das Gewicht der Einrichtung abgestimmt, dass diese nicht weiter angehoben wird. Und bei noch weiterer Betätigung der Pumpe wird die Hydraulikflüssigkeit bevorzugt über ein die Pumpe überbrückendes Druckbegrenzungsventil im Kreis gefördert.

Bei geschickter Abstimmung der übrigen Komponenten kann bei der vorstehend dargelegten Weiterbildung der Erfindung auf das primäre Druckminderventil verzichtet werden. Hierdurch lässt sich eine nochmalige apparative Vereinfachung des hydraulischen Systems erreichen. Allerdings kann sich in diesem Falle insoweit eine Einbuße an Bedienungskomfort ergeben, als ein den Systemdruck hinter der Pumpe limitierendes Druckbegrenzungsventil dann typischerweise auf einen geringeren maximalen Druck einzustellen ist. Hierdurch fällt der sich bei Verwendung eines primären Druckminderventils und eines auf einen hohen maximalen Systemdruck eingestellten Druckbegrenzungsventils beim Erreichen der stabilen endgültigen Aufstellposition der Einrichtung ergebende signifikante Drucksprung weg, so dass der Bediener gegebenenfalls weniger leicht merkt, dass der Prozess der Lagesicherung abgeschlossen ist.

Bei typischen Anwendungsfällen der vorliegenden Erfindung werden die beiden primären Stützfüße auf einer Seite der Basisstruktur und die beiden sekundären Stützfüße auf deren anderer, gegenüberliegender Seite angeordnet sein. Dies hat Vorteile insbesondere beim Aufheben der Lagesicherung durch sequentielles Betätigen der Ablassventile. Allerdings ist dies nicht zwingend. Vielmehr ist im Rahmen der vorliegenden Erfindung auch denkbar, im Einzelfall die beiden primären und die beiden sekundären Stützfüße jeweils einander diagonal gegenüberliegend anzuordnen. Erkennbar eignet sich, um auch insoweit einem Missverständnis vorzubeugen, die vorliegende Erfindung auch zum Einsatz an solchen Fahrwerken, bei denen die vier Rollen und/oder die vier Stützfüße nicht jeweils an den Ecken eines Rechtecks angeordnet, sondern anderweitig verteilt sind. Die Angabe, wonach vier Rollen und vier Stützfüße vorgesehen sind, darf im Übrigen nicht dahingehend missverstanden werden, dass nur vier Rollen und vier Stützfüße vorgesehen sind. Erkennbar können beispielsweise auch jeweils mehr als zwei primäre und zwei sekundäre Stützfüße zum Einsatz kommen. Schließlich dürfen die vorstehenden Erläuterungen nicht dahingehend missverstanden werden, dass jeweils der Stützfuß und der diesen betätigende Linearaktuator zwei baulich getrennte Einheiten sein müssen; vielmehr können jeweils der Stützfuß und der diesen betätigende Linearaktuator auch, wie dies weiter unten beispielhaft anhand eines Ausführungsbeispiels erläutert ist, zu einer Baugruppe zusammengefasst sein. So erfasst die Erfindung auch solche Ausgestaltungen, bei denen der jeweilige Stützfuß mittelbar, nämlich insbesondere über den zugeordneten Linearaktuator an der Basisstruktur angeordnet ist.

Im Folgenden wird die vorliegende Erfindung anhand eines in der Zeichnung veranschaulichten bevorzugten Ausführungsbeispiels näher erläutert. Dabei zeigt
- Fig. 1: einen hydraulischen Schaltplan einer im Rahmen der Erfindung einsetzbaren hydraulischen Stützfuß-Betätigungseinrichtung und
- Fig. 2: einen Vertikalschnitt durch eine im Rahmen der Erfindung einsetzbare kombinierte Anordnung von Rolle, Stützfuß und Linearaktuator in einer gemeinsamen Baugruppe.

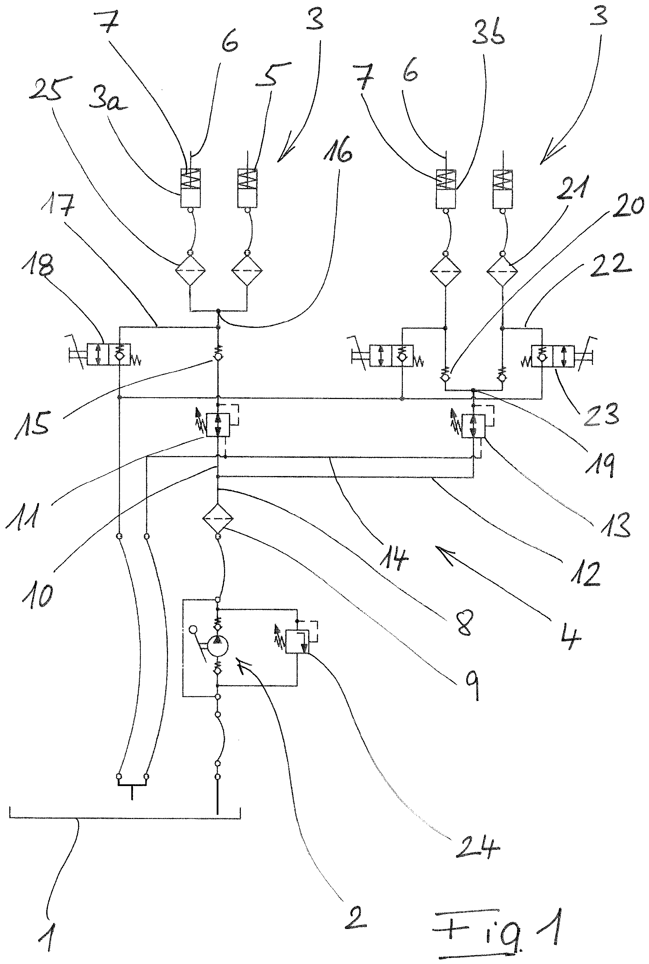

Ein Fahrwerk, an dem die in Fig. 1 anhand ihres Schaltplans veranschaulichte hydraulische Stützfuß-Betätigungseinrichtung zum Einsatz kommen kann, weist eine (z. B. als Rahmen ausgeführte) Basisstruktur, vier daran angeordnete Rollen und vier ebenfalls an der Basisstruktur angeordnete, absenkbare und anhebbare Stützfüße auf. Solche Fahrwerke sind üblich und allgemein bekannt. Einer Erläuterung von Fahrgestell-Details, auf die es für die vorliegende Erfindung nicht ankommt, bedarf es nicht.

Die in Fig. 1 gezeigte hydraulische Stützfuß-Betätigungseinrichtung umfasst einen Vorratsbehälter 1, eine manuell per Hand oder Fuß zu betätigende Pumpe 2, vier Stützfuß-Linearaktuatoren 3 und eine den Vorratsbehälter 1, die Pumpe 2 und die Linearaktuatoren 3 miteinander verbindende Leitungs- und Ventilanordnung 4. Die vier Linearaktuatoren 3 sind als einfach wirkende Hydraulikzylinder 5 ausgeführt. Der Rückstellung der jeweiligen Einheit 6 aus Kolben und Kolbenstange dient eine integrierte Rückstellfeder 7.

Die Druckleitung 8 verzweigt sich nach einem Filter (Sieb) 9 in zwei Äste. Ein erster Ast 10 führt zu einem primären Druckminderventil 11; und ein zweiter Ast 12 führt zu einem sekundären Druckminderventil 13. Das primäre Druckminderventil 11 ist dabei auf einen höheren Ausgangsdruck eingestellt als das sekundäre Druckminderventil 13. Für die korrekte Einhaltung des jeweils voreingestellten ausgangsseitigen Druckes - als Druckdifferenz gegenüber dem im Vorratsbehälter 1 herrschenden Druck - kommunizieren beide Druckminderventile 11 und 13 über die weitere Hydraulikleitung 14 mit dem Vorratsbehälter.

Ausgangsseitig ist das primäre Druckminderventil 11 über ein primäres Rückschlagventil 15, eine diesem nachgeschalteten Leitungsverzweigung 16 und zwei Filter 25 (Siebe) mit zwei primären Linearaktuatoren 3a verbunden. Zwischen dem primären Rückschlagventil 15 und den beiden primären Linearaktuatoren 3a zweigt dabei eine gemeinsame primäre Ablassleitung 17 mit einem darin angeordneten, manuell per Hand oder Fuß zu betätigendes primären Ablassventil 18 ab.

Das sekundäre Druckminderventil 13 ist ausgangsseitig über eine Leitungsverzweigung 19, zwei dieser nachgeschaltete sekundäre Rückschlagventile 20 und zwei Filter 21 mit zwei sekundären Linearaktuatoren 3b verbunden. Jeweils zweigt zwischen dem sekundären Rückschlagventil 20 und dem jeweils zugeordneten sekundären Linearaktuator 3b eine individuelle sekundäre Ablassleitung 22 mit einem darin angeordneten, manuell per Hand oder Fuß zu betätigendes sekundären Ablassventil 23 ab. Die primäre Ablassleitung 17 und die beiden sekundären Ablassleitungen 22 führen zusammengefasst zum Vorratsbehälter 1 zurück.

Schließlich ist ein die Pumpe 2 überbrückendes Druckbegrenzungsventil 24 erkennbar. Über dieses wird Hydraulikflüssigkeit im Kreis gefördert, wenn die Pumpe 2 weiterhin betätigt wird, nachdem die beiden den primären Linearaktuatoren 3a zugeordneten primären Stützfüße vollständig, bis zum Erreichen des jeweiligen Anschlags abgesenkt sind und die beiden den sekundären Linearaktuatoren 3b zugeordneten sekundären Stützfüße - gemäß dem für das sekundäre Druckminderventil 13 vorgegebenen ausgangsseitigen Druck - fest auf dem Untergrund aufstehen.

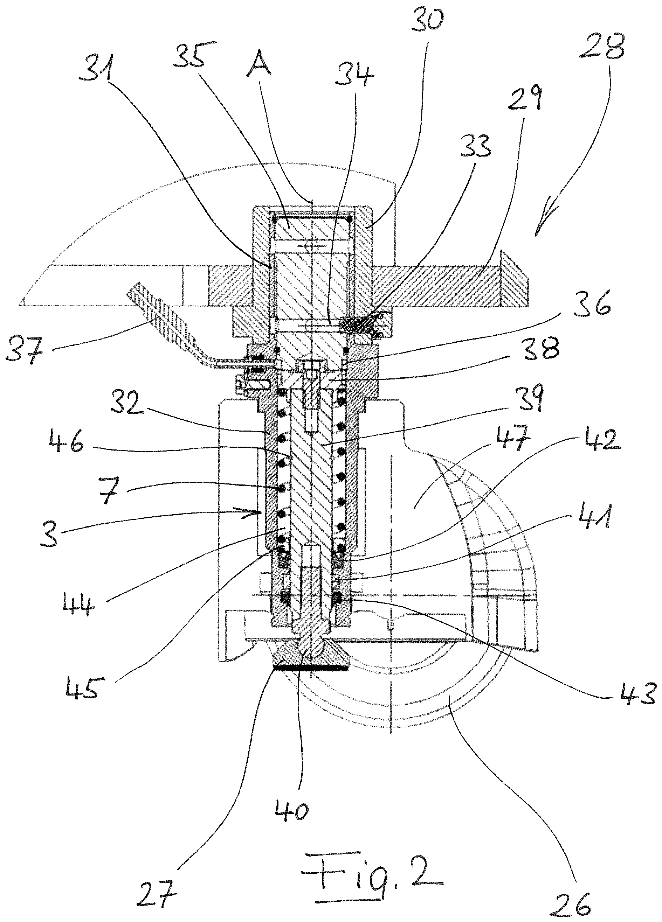

Fig. 2 veranschaulicht eine Möglichkeit, wie bei einem erfindungsgemäßen Fahrgestell jeweils eine Rolle 26, ein Stützfuß 27 und ein Linearaktuator 3 zu einer gemeinsamen Baugruppe zusammengefasst sein kann. Dabei ist an einem die Basisstruktur 28 bildenden Rahmen 29 des Fahrgestells eine Lagerhülse 30 angebracht. In diese ist mit einem nach oben aufragenden zylindrischen Ansatz 31 der Zylinder 32 des Linearaktuators 3 eingesetzt. Die Lagesicherung des Zylinders 32 in der Lagerhülse 30 erfolgt dabei mittels einer Schraube 33, die in eine der Gewindebohrungen 34 eines in den Ansatz 31 eingesetzten Kerns 35 eingeschraubt ist, welcher den Zylinder 32 nach oben dicht verschließt und dessen hydraulischen Arbeitsraum 36 nach oben begrenzt.

Der hydraulische Arbeitsraum 36, dessen Beaufschlagung der Hydraulikanschluss 37 dient, wird nach unten durch den Kolben 38 begrenzt. Mit diesem ist die Kolbenstange 39 verbunden, an deren unterem Ende der Stützfuß 27 angeordnet ist. Zum Ausgleich eines nur einseitigen Anhebens der Basisstruktur 28 (über die primären Stützfüße) mit der Folge einer geringfügigen Neigung des Fahrgestells ist der Stützfuß 27 dabei auf einem endseitig an der Kolbenstange 39 angebrachten Kugelkopf 40 gelagert. Angesichts sich aus der besagten Neigung ergebender Querkräfte ist die Kolbenstange 39 in dem Zylinder 32 in gesonderten Gleitbuchsen 41 geführt. Dies entlastet auch die beiden Dichtungen 42 und 43, die den zwischen Kolbenstange 39 und Zylinder 32 bestehenden, die Rückstellfeder 7 aufnehmenden Ringraum 44 nach unten - gegen den Austritt von Hydrauliköl und das Eindringen von Schmutz - abdichten.

Im Bereich des unteren Endes der Rückstellfeder 7 ist in den Ringraum 44 ein Anschlagring 45 eingesetzt. Mit diesem wirkt, im Sinne eines die Bewegung der Kolbenstange 39 begrenzenden Anschlags, der auf der Kolbenstange 39 fixierte Stoppring 46 zusammen.

Auf dem Zylinder 32 des Linearaktuators 3 ist, um die vertikale Achse A verschwenkbar, der Rollenträger 47 gelagert. In diesem wiederum sind zwei Rollen 26 drehbar gelagert, welche - als Doppelrolle - dergestalt zueinander versetzt angeordnet sind, dass der Linearaktuator 3 zwischen ihnen Platz findet.

## Patentansprüche

1. Fahrwerk einer transportablen Einrichtung, umfassend eine Basisstruktur (28), vier daran angeordnete Rollen (26), vier ebenfalls an der Basisstruktur angeordnete, absenkbare und anhebbare Stützfüße (27) und eine hydraulische Stützfuß-Betätigungseinrichtung, welche einen Vorratsbehälter (1), eine manuell per Hand oder Fuß zu betätigende Pumpe (2), vier Stützfuß-Linearaktuatoren (3) und eine den Vorratsbehälter (1), die Pumpe (2) und die Linearaktuatoren (3) miteinander verbindende, rein hydro-mechanische Leitungs- und Ventilanordnung (4) aufweist, **dadurch gekennzeichnet, dass** die Leitungs- und Ventilanordnung (4) dergestalt ausgeführt ist, dass mittels durch die Pumpe (2) aus dem Vorratsbehälter (1) geförderter Hydraulikflüssigkeit vor einer Druckbeaufschlagung zweier sekundärer Linearaktuatoren (3b) zunächst durch Druckbeaufschlagung der beiden anderen, primären Linearaktuatoren (3a) die beiden diesen zugeordneten Stützfüße (27) bis zum Erreichen eines mechanischen Anschlags (45, 46) unter Anheben der Basisstruktur (28) vollständig ausfahrbar sind.

2. Fahrwerk nach Anspruch 1, **dadurch gekennzeichnet, dass** die Linearaktuatoren (3) einfach wirkend ausgeführt sind.

3. Fahrwerk nach Anspruch 1 oder Anspruch 2, **dadurch gekennzeichnet, dass** die beiden primären Linearaktuatoren (3a) dergestalt hydraulisch gekoppelt sind, dass sie aus der Pumpe (2) über ein einziges, gemeinsames primäres Rückschlagventil (15) beaufschlagt werden.

4. Fahrwerk nach Anspruch 3, **dadurch gekennzeichnet, dass** zwischen dem primären Rückschlagventil (15) und den beiden primären Linearaktuatoren (3a) eine gemeinsame primäre Ablassleitung (17) abzweigt.

5. Fahrwerk nach Anspruch 4, **dadurch gekennzeichnet, dass** in der primären Ablassleitung (17) ein manuell per Hand oder Fuß zu betätigendes primäres Ablassventil (18) angeordnet ist.

6. Fahrwerk nach einem der Ansprüche 3 bis 5, **dadurch gekennzeichnet, dass** zwischen die Pumpe (2) und das primäre Rückschlagventil (15) ein primäres Druckminderventil (11) geschaltet ist.

7. Fahrwerk nach einem der Ansprüche 1 bis 6, **dadurch gekennzeichnet, dass** die beiden sekundären Linearaktuatoren (3b) dergestalt hydraulisch parallelgeschaltet sind, dass sie aus der Pumpe (2) über zwei getrennte sekundäre Rückschlagventile (20) beaufschlagt werden.

8. Fahrwerk nach Anspruch 7, **dadurch gekennzeichnet, dass** zwischen dem jeweiligen sekundären Rückschlagventil (20) und dem jeweils zugeordneten sekundären Linearaktuator (3b) jeweils eine individuelle sekundäre Ablassleitung (22) abzweigt.

9. Fahrwerk nach Anspruch 8, **dadurch gekennzeichnet, dass** in den sekundären Ablassleitungen (22) jeweils ein manuell per Hand oder Fuß zu betätigendes sekundäres Ablassventil (23) angeordnet ist.

10. Fahrwerk nach einem der Ansprüche 7 bis 9, **dadurch gekennzeichnet, dass** zwischen die Pumpe (2) und die sekundären Rückschlagventile (20) ein gemeinsames sekundäres Druckminderventil (13) geschaltet ist.

11. Fahrwerk nach den Ansprüchen 6 sowie 10, **dadurch gekennzeichnet, dass** das primäre Druckminderventil (11) auf einen höheren Ausgangsdruck eingestellt ist als das sekundäre Druckminderventil (13).

## Claims

1. A chassis of a transportable device, comprising a base structure (28), four rollers (26) arranged thereon, four support feet (27) which are likewise arranged on the base structure and which can be lowered and raised, and a hydraulic support foot actuation device which has a reservoir (1), a pump (2) which can be actuated manually by hand or by foot, four support foot linear actuators (3), and a purely hydromechanical line and valve assembly (4) which connects the reservoir (1), the pump (2), and the linear actuators (3) to one another, **characterised in that** the line and valve assembly (4) is designed such that, before pressure is applied to two secondary linear actuators (3b), the two support feet (27) associated with the two other, primary linear actuators (3a) can be completely extended by first applying pressure to said primary linear actuators by means of hydraulic liquid which is pumped out of the reservoir (1) by the pump (2), until a mechanical stop (45, 46) is reached, raising the base structure (28).

2. The chassis according to Claim 1, **characterised in that** the linear actuators (3) are designed to operate singly.

3. The chassis according to Claim 1 or 2, **characterised in that** the two primary linear actuators (3a) are hydraulically coupled such that pressure is applied to them from the pump (2) via a single common primary check valve (15).

4. The chassis according to Claim 3, **characterised in that** a common primary discharge line (17) branches off between the primary check valve (15) and the two primary linear actuators (3a).

5. The chassis according to Claim 4, **characterised in that** a primary discharge valve (18) which can be operated manually by hand or by foot is arranged in the primary discharge line (17).

6. The chassis according to any one of Claims 3 to 5, **characterised in that** a primary pressure reduction valve (11) is connected between the pump (2) and the primary check valve (15).

7. The chassis according to any one of Claims 1 to 6, **characterised in that** the two secondary linear actuators (3b) are hydraulically connected in parallel such that pressure is applied to them from the pump (2) via two separate secondary check valves (20).

8. The chassis according to Claim 7, **characterised in that** an individual secondary discharge line (22) branches off between each secondary check valve (20) and the associated secondary linear actuator (3b).

9. The chassis according to Claim 8, **characterised in that** a secondary discharge valve (23) which can be operated manually by hand or by foot is arranged in each of the secondary discharge lines (22).

10. The chassis according to any one of Claims 7 to 9, **characterised in that** a common secondary pressure reduction valve (13) is connected between the pump (2) and the secondary check valves (20).

11. The chassis according to Claims 6 and 10, **characterised in that** the primary pressure reduction valve (11) is set to a higher output pressure than the secondary pressure reduction valve (13).

## Revendications

1. Train de roulement d'un dispositif transportable, comprenant une structure de base (28), quatre roulettes (26) disposées sur celle-ci, quatre pieds d'appui (27) également disposés sur la structure de base, pouvant être abaissés et levés et un dispositif d'actionnement de pied d'appui hydraulique, qui présente un réservoir de stockage (1), une pompe (2) à actionner manuellement à la main ou au pied, quatre actionneurs linéaires de pied d'appui (3) et un dispositif de conduite et de soupape (4) purement hydromécanique, reliant les uns aux autres le réservoir de stockage (1), la pompe (2) et les actionneurs linéaires (3), **caractérisé en ce que** le dispositif de conduite et soupape (4) est configuré de telle sorte que au moyen du fluide hydraulique refoulé par la pompe (2) à partir de réservoir de stockage (1) avant une sollicitation par pression de deux actionneurs linéaires secondaires (3b) tout d'abord sous l'effet d'une sollicitation par pression des deux autres actionneurs linéaires primaires (3a), les deux pieds d'appui (27) coordonnés à ces derniers peuvent être totalement déployés jusqu'à atteindre une butée mécanique (45,46) sous l'effet du levage de la structure de base (28).

2. Train de roulement selon la revendication 1, **caractérisé en ce que** les actionneurs linéaires (3) ont une configuration à action simple.

3. Train de roulement selon la revendication 1 ou 2, **caractérisé en ce que** les deux actionneurs linaires primaires (3a) sont couplés hydrauliquement de telle sorte qu'ils soient sollicités à partir de la pompe (2) par l'intermédiaire d'un clapet anti retour primaire commun unique (15).

4. Train de roulement selon la revendication 3, **caractérisé en ce que** entre le clapet anti retour primaire (15) et les deux actionneurs linéaires primaires (3a) bifurque une conduite d'évacuation primaire commune (17).

5. Train de roulement selon la revendication 4, **caractérisé en ce que** dans la conduite d'évacuation primaire (17) est disposée une soupape d'évacuation primaire (18) à actionner manuellement à la main ou au pied.

6. Train de roulement selon une des revendications 3 à 5, **caractérisé en ce que** entre la pompe (2) et le clapet anti retour primaire (15) est branchée une soupape de réduction de pression primaire (11).

7. Train de roulement selon une des revendications 1 à 6, **caractérisé en ce que** les deux actionneurs linéaires secondaires (3b) sont branchés hydrauliquement en parallèle de telle sorte qu'ils soient sollicités à partir de la pompe (2) par l'intermédiaire de deux clapets anti retour secondaires séparés (20).

8. Train de roulement selon la revendication 7, **caractérisé en ce que** entre le clapet antiretour secondaire respectif (20) et l'actionneur linéaire secondaire respectivement coordonné (3b) bifurque respectivement une conduite d'évacuation secondaire individuelle (22).

9. Train de roulement selon la revendication 8, **caractérisé en ce que** dans les conduites d'évacuation secondaires (22) une soupape d'évacuation secondaire (23) à actionner manuellement à la main ou au pied est respectivement disposée.

10. Train de roulement selon une des revendications 7 à 9, **caractérisé en ce que** entre la pompe (2) et les clapets anti retour secondaires (20) une soupape de réduction de pression secondaire (13) commune est branchée.

11. Train de roulement selon une des revendications 6 et 10, **caractérisé en ce que** la soupape de réduction de pression primaire (11) est réglée sur une pression de départ plus haute que la soupape de réduction de pression secondaire (13).
